# EUROPEAN PATENT APPLICATION

(11) **EP 3 945 686 A1**
(43) Date of publication of application: **02.02.2022**
(21) Application number: 21188039.8
(22) Date of filing: 27.07.2021
(51) Int. Cl.: H04J 3/06

(54) **METHOD, APPARATUS, OLT AND ONU FOR MULTI-DOMAIN TRANSMISSION OF TIME SYNCHRONIZATION**

(30) Priority: 27.07.2020 CN 202010729752
(71) Applicant: Nokia Technologies Oy, 02610 Espoo (FI)
(72) Inventor: SUN, Lifei, Shanghai (CN); GENG, Dan, Shanghai (CN); ZOU, Jiabao, Shanghai (CN)
(74) Representative: DREISS Patentanwälte PartG mbB

(57) **Abstract**

The present disclosure provides a method, apparatus, OLT and ONU for multi-domain transmission of time synchronization, wherein the optical line terminal supports multiple domains, the method comprises: obtaining absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number; generating at least one PLOAM message according to the absolute ToD information and based on the extended PLOAM message format, and broadcasting the at least one PLOAM message to optical network units. According to the solution of the present disclosure, multi-frequency and ToD domain transmission can be realized in the passive optical network, and wholesale distribution can be realized.

## Description

### TECHNICAL FIELD

The present disclosure relates to the field of wired communication technologies, and in particular relates to a technical scheme for implementing multi-domain transmission in xPON (Passive Optical Network).

### BACKGROUND

As a new generation optical fiber access technology, xPON has great advantages in the aspects of anti-interference performance, bandwidth characteristics, access distance, maintenance and management and the like, and its application is highly concerned by global operators. The ITU-T related standard of xPON (G.984.3/G.9807.1, etc.) assumes that an OLT (Optical Line Terminal) supports only one ToD (Time of Day) clock domain (and holds true for a common GPON/XGS-PON system), and the case of multiple ToD clock domains per OLT is beyond the scope of the ITU-T related standard. And the ITU-T standard of xPON (G.984.1/G.9807.1, etc.) also defines a frequency domain transmitted only via 8KHz (125us per frame) of xPON. That is, according to the current ITU-T standard definition of xPON, the OLT supports only one frequency and ToD domain.

### SUMMARY

The object of the present disclosure is to provide a mechanism for multiple Frequency and ToD domains distribution over xPON network, specifically, to provide a method, apparatus, OLT and ONU (Optical Network Unit) for implementing multi-domain transmission of time synchronization.

According to an embodiment of the present disclosure, there is provided a method for multi-domain transmission of time synchronization in an optical line terminal, wherein the optical line terminal supports multiple domains, the method comprises:
obtaining absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number;
generating at least one PLOAM message according to the absolute ToD information and based on the extended PLOAM (Physical Layer Operations, Administration and Maintenance) message format, and broadcasting the at least one PLOAM message to optical network units.

According to another embodiment of the present disclosure, there is provided a method for multi-domain transmission of time synchronization in an optical line terminal, wherein the optical line terminal supports multiple domains, the method comprises:
obtaining relative ToD information corresponding to the multiple domains according to the phase information of each domain in the multiple domains, wherein the relative ToD information comprises a value pair distributed for the main domain and the phase deviation relative to the main domain of each domain except the main domain, the value pair comprises a superframe sequence number corresponding to the main domain and a timestamp of the superframe sequence number;
generating at least one PLOAM message according to the relative ToD information and based on the extended PLOAM message format, and broadcasting the at least one PLOAM message to optical network units.

According to another embodiment of the present disclosure, there is provided a method for multi-domain transmission of time synchronization in an optical line terminal, wherein the optical line terminal supports multiple domains, the method comprises:
obtaining absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number;
generating an xPON frame according to the absolute ToD information and based on the extended xPON frame header, and transmitting the xPON frame to optical network units.

According to another embodiment of the present disclosure, there is provided a method for multi-domain transmission of time synchronization in an optical line terminal, wherein the optical line terminal supports multiple domains, the method comprises:
obtaining relative ToD information corresponding to the multiple domains according to the phase information of each domain in the multiple domains, wherein the relative ToD information comprises a value pair distributed for a main domain in the multiple domains and the phase deviation relative to the main domain of each domain except the main domain, and the value pair comprises a superframe sequence number corresponding to the main domain and a timestamp of the superframe sequence number;
generating an xPON frame according to the relative ToD information and based on the extended xPON frame header, and transmitting the xPON frame to optical network units.

According to another embodiment of the present disclosure, there is also provided a method for multi-domain transmission of time synchronization in an optical network unit, wherein the method comprises:
receiving a PLOAM message or an xPON frame from an optical line terminal, wherein the optical line terminal supports multiple domains, the PLOAM message or the xPON frame is generated by the optical line terminal according to absolute ToD information or relative ToD information corresponding to the multiple domains;
recovering ToD information of a domain available for the optical network unit from the PLOAM message or the xPON frame.

According to another embodiment of the present disclosure, there is also provided a first apparatus for multi-domain transmission of time synchronization in an optical line terminal, wherein the optical line terminal supports multiple domains, the first apparatus comprises:
means for obtaining absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number;
means for generating at least one PLOAM message according to the absolute ToD information and based on extended PLOAM message format, and broadcasting the at least one PLOAM message to optical network units.

According to another embodiment of the present disclosure, there is also provided a second apparatus for multi-domain transmission of time synchronization in an optical line terminal, wherein the optical line terminal supports a plurality of domains, the second apparatus comprises:
means for obtaining relative ToD information corresponding to the multiple domains according to the phase information of each domain in the multiple domains, wherein the relative ToD information comprises a value pair distributed for the main domain and the phase deviation relative to the main domain of each domain except the main domain, the value pair comprises a superframe sequence number corresponding to the main domain and a timestamp of the superframe sequence number;
means for generating at least one PLOAM message according to the relative ToD information and based on the extended PLOAM message format, and broadcasting the at least one PLOAM message to optical network units.

According to another embodiment of the present disclosure, there is also provided a third apparatus for multi-domain transmission of time synchronization in an optical line terminal, wherein the optical line terminal supports multiple domains, the third apparatus comprises:
means for obtaining absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number;
means for generating an xPON frame according to the absolute ToD information and based on the extended xPON frame header, and transmitting the xPON frame to optical network units.

According to another embodiment of the present disclosure, there is also provided a fourth apparatus for multi-domain transmission of time synchronization in an optical line terminal, wherein the optical line terminal supports multiple domains, the fourth apparatus comprises:
means for obtaining relative ToD information corresponding to the multiple domains according to the phase information of each domain in the multiple domains, wherein the relative ToD information comprises a value pair distributed for a main domain in the multiple domains and the phase deviation relative to the main domain of each domain except the main domain, and the value pair comprises a superframe sequence number corresponding to the main domain and a timestamp of the superframe sequence number;
means for generating an xPON frame according to the relative ToD information and based on the extended xPON frame header, and transmitting the xPON frame to optical network units.

According to another embodiment of the present disclosure, there is also provided a fifth apparatus for multi-domain transmission in an optical network unit, wherein the fifth apparatus comprises:
means for receiving a PLOAM message or an xPON frame from an optical line terminal, wherein the optical line terminal supports multiple domains, the PLOAM message or the xPON frame is generated by the optical line terminal according to absolute ToD information or relative ToD information corresponding to the multiple domains;
means for recovering ToD information of a domain available for the optical network unit from the PLOAM message or the xPON frame.

According to another embodiment of the present disclosure, there is also provided an optical line terminal, wherein the optical line terminal comprises:
a memory for storing one or more programs;
one or more processors connected with the memory,
the one or more programs, when executed by the one or more processors, cause the one or more processors to perform the following operations:
   obtaining absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number;
   generating at least one PLOAM message according to the absolute ToD information and based on the extended PLOAM message format, and broadcasting the at least one PLOAM message to optical network units.

According to another embodiment of the present disclosure, there is also provided an optical line terminal, wherein the optical line terminal comprises:
a memory for storing one or more programs;
one or more processors connected with the memory,
the one or more programs, when executed by the one or more processors, cause the one or more processors to perform the following operations:
   obtaining relative ToD information corresponding to the multiple domains according to the phase information of each domain in the multiple domains, wherein the relative ToD information comprises a value pair distributed for the main domain and the phase deviation relative to the main domain of each domain except the main domain, the value pair comprises a superframe sequence number corresponding to the main domain and a timestamp of the superframe sequence number;
   generating at least one PLOAM message according to the relative ToD information and based on the extended PLOAM message format, and broadcasting the at least one PLOAM message to optical network units.

According to another embodiment of the present disclosure, there is also provided an optical line terminal, wherein the optical line terminal comprises:
a memory for storing one or more programs;
one or more processors connected with the memory,
the one or more programs, when executed by the one or more processors, cause the one or more processors to perform the following operations:
   obtaining absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number;
   generating an xPON frame according to the absolute ToD information and based on the extended xPON frame header, and transmitting the xPON frame to optical network units.

According to another embodiment of the present disclosure, there is also provided an optical line terminal, wherein the optical line terminal comprises:
a memory for storing one or more programs;
one or more processors connected with the memory,
the one or more programs, when executed by the one or more processors, cause the one or more processors to perform the following operations:
   obtaining relative ToD information corresponding to the multiple domains according to the phase information of each domain in the multiple domains, wherein the relative ToD information comprises a value pair distributed for a main domain in the multiple domains and the phase deviation relative to the main domain of each domain except the main domain, and the value pair comprises a superframe sequence number corresponding to the main domain and a timestamp of the superframe sequence number;
   generating an xPON frame according to the relative ToD information and based on the extended xPON frame header, and transmitting the xPON frame to optical network units.

According to another embodiment of the present disclosure, there is also provided an optical network unit, wherein the optical network unit comprises:
a memory for storing one or more programs;
one or more processors connected with the memory,
the one or more programs, when executed by the one or more processors, cause the one or more processors to perform the following operations:
   receiving a PLOAM message or an xPON frame from an optical line terminal, wherein the optical line terminal supports multiple domains, the PLOAM message or the xPON frame is generated by the optical line terminal according to absolute ToD information or relative ToD information corresponding to the multiple domains;
   recovering ToD information of a domain available for the optical network unit from the PLOAM message or the xPON frame.

According to another embodiment of the present disclosure, there is also provided a computer readable storage medium storing a computer program, which when executed by a processor, cause the processor to perform the method for multi-domain transmission of time synchronization described in the present disclosure.

Compared with the prior art, the method has the following advantages: the optical line terminal can support multiple domains, the optical line terminal can obtain the absolute ToD information or relative ToD information corresponding to the multiple domains, and transmit message generated according to the obtained ToD related information (the absolute ToD information or the relative ToD information) to the optical network unit by extending PLOAM message or xPON frame header, and the optical network unit can recover ToD information corresponding to a designated domain from the received message, thereby realizing the support of multi-domain transmission; and, the optical network unit can transmit the recovered information to its related downstream, thereby realizing wholesale distribution; furthermore, the optical line terminal is capable of identifying frequency offset information relative to a main domain of each of the multiple domains except the main domain, and transmitting the message generated according to the frequency offset information and ToD related information to optical network units, so that optical network unit can recover the frequency information and ToD information corresponding to the specified domain from the received message.

### BRIEF DESCRIPTION OF THE DRAWINGS

Other features, objectives, and advantages of the present disclosure will become more apparent through reading the following detailed depiction of the non-limitative embodiments with reference to the accompanying drawings:
Fig. 1 shows a flowchart of a method for multi-domain transmission in an optical line terminal according to an embodiment of the present disclosure;
Fig. 2 shows a flowchart of a method for multi-domain transmission in an optical line terminal according to another embodiment of the present disclosure;
Fig. 3 shows a flowchart of a method for multi-domain transmission in an optical line terminal according to another embodiment of the present disclosure;
Fig. 4 shows a schematic diagram of extending physical synchronization block downstream according to an example of the present disclosure;
Fig. 5 shows a schematic diagram of extending XGTC frame header according to an example of the present disclosure;
Fig. 6 shows a flowchart of a method for multi-domain transmission in an optical line terminal according to another embodiment of the present disclosure;
Fig. 7 shows a schematic diagram of extending physical synchronization block downstream according to another example of the present disclosure;
Fig. 8 shows a schematic diagram of extending an XGTC frame header according to another example of the present disclosure;
Fig. 9 shows a flowchart of a method for multi-domain transmission in an optical network unit according to an embodiment of the present disclosure;
Fig. 10 shows a structural diagram of a first apparatus for multi-domain transmission in an optical line terminal according to an embodiment of the present disclosure;
Fig. 11 shows a structural diagram of a second apparatus for multi-domain transmission in an optical line terminal according to another embodiment of the present disclosure;
Fig. 12 shows a structural diagram of a third apparatus for multi-domain transmission in an optical line terminal according to another embodiment of the present disclosure;
Fig. 13 shows a structural diagram of a fourth apparatus for multi-domain transmission in an optical line terminal according to another embodiment of the present disclosure;
Fig. 14 shows a structural diagram of a fifth apparatus for multi-domain transmission in an optical network unit according to an embodiment of the present disclosure;
Fig. 15 shows an exemplary system that can be used to implement the various embodiments described in the present disclosure.

Same or similar reference numbers in the drawings represent the same or similar components.

### DETAILED DESCRIPTION

Before discussing example embodiments in more detail, it is noted that some example embodiments are described as processes or methods depicted as flowcharts. Although the flowcharts describe the operations as sequential processes, many of the operations may be performed in parallel, concurrently or simultaneously. In addition, the order of operations may be rearranged. The processes may be terminated when its operations are completed, but may also have additional steps not included in the figure. The processes may correspond to methods, functions, procedures, subroutines, subprograms, etc.

The "device" mentioned in this context refers to the smart electronic device that can carry out numerical computations and/or logical computations and other predetermined processing procedures through running predetermined programs or instructions, and may comprise a processor and a memory. It is by the processor that the program instructions prestored in the memory are executed to carry out the predetermined processing procedures, or by Application Specific Integrated Circuit (ASIC), Field Programmable Gate Array (FPGA), Digital Signal Processor (DSP) and other like hardware that the predetermined processing procedures are carried out, or some combination of the two mentioned scenarios.

The methods (some of which are showed by flowcharts) discussed infra may be implemented through hardware, software, firmware, middleware, microcode, hardware description language or any combination thereof. When they are implemented with software, firmware, middleware or microcode, the program code or code segment for executing essential tasks may be stored in a machine or a computer readable medium (e.g., storage medium). (One or more) processors may implement essential tasks.

The specific structures and function details disclosed here are only representative, for a purpose of describing the exemplary embodiments of the present disclosure. The present disclosure, however, may be specifically implemented through many alternative embodiments, and should not be construed as limited to only the embodiments illustrated here.

It will be understood that although terms "first," "second" might be used here to describe respective units, these units should not be limited by these terms. Use of these terms is only for distinguishing one unit from another. For example, without departing from the scope of the exemplary embodiments, the first unit may be referred to as the second unit, and similarly the second unit may be referred to as the first unit. The term "and/or" used here includes any and all combinations of one or more associated items as listed.

The terms used here are only for describing preferred embodiments, not intended to limit exemplary embodiments. Unless otherwise indicated, singular forms "a" or "one" used here further intends to include plural forms. It should also be appreciated that the terms "comprise" and/or "include" used here prescribe existence of features, integers, steps, operations, units and/or components as stated, but do not exclude existence or addition of one or more other features, integers, steps, operations, units, components, and/or a combination thereof.

It should also be noted that in some alternative embodiments, the functions/actions as mentioned may occur in an order different from what is indicated in the drawings. For example, dependent on the functions/actions involved, two successively illustrated diagrams may be executed substantially simultaneously or in a reverse order sometimes.

The present application finds that, according to the current ITU-T standard definition of xPON, OLT supports only one frequency and ToD domain, however, more and more users expect to access multiple ToD domains from different operators in the network, especially for wholesale markets. Based on this, the present disclosure proposes a mechanism to support multiple frequency and ToD domain distribution over xPON.

The present disclosure is described in further detail below with reference to the attached drawing figures.

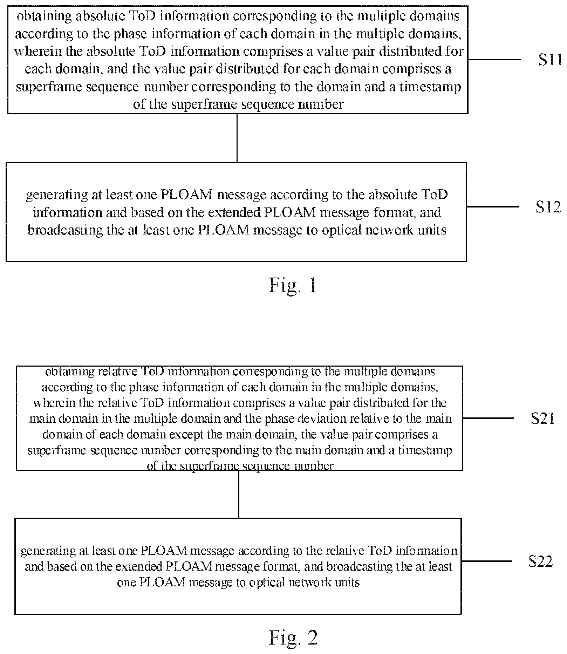

Fig. 1 shows a flowchart of a method for multi-domain transmission in an optical line terminal according to an embodiment of the present disclosure. Wherein the optical line terminal supports multiple domains, in some embodiments, the multiple domains are also described as multiple ToD domains or multiple Frequency and ToD domains. The method according to the present embodiment includes step S11 and step S12. In step S11, the OLT obtains absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number; in step S12, the OLT generates at least one PLOAM message according to the absolute ToD information and based on the extended PLOAM message format, and broadcasts the at least one PLOAM message to ONUs.

In step S11, the OLT obtains absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number.

In some embodiments, the multiple domains include a main domain and at least one other domain (hereinafter also possibly referred to as "non-main domain"), the main domain may also be referred to as "main frequency domain" or "main ToD domain" in the context. In some embodiments, the main ToD domain is still transmitted according to the value pair (N, TstampN) defined by xPON standard, where N represents superframe sequence number and TstampN represents timestamp corresponding to N, and the scheme of the value pair defined by the existing xPON standard for the unique ToD domain is extended to the case of multiple domains, that is, the ToD information corresponding to other domains except the main domain is also represented as the value pair consisting of superframe sequence number and timestamp. In some embodiments, for each domain in the multiple domains, a value pair is distributed for the domain according to the phase information corresponding to the domain, where the value pair includes a superframe sequence number corresponding to the domain and a timestamp of the superframe sequence number. In some embodiments, the value pair distributed for each domain may be represented in the form of (N, TstampN) as mentioned above, where N represents a superframe sequence number corresponding to the corresponding domain, TstampN represents a timestamp of the superframe sequence number corresponding to the corresponding domain, and each value pair is used to identify a different domain, that is, the main ToD domain still implements transmission using the value pair defined by the ITU-T standard, and extends the existing scheme of defining the value pair of ToD domain to other ToD domains other than the main domain. In some embodiments, each of the multiple domains supported by the OLT shares the same value of N, but the value of TstampN corresponding to each domain is different; in some embodiments, the values of N and TstampN corresponding to each of the multiple domains supported by the OLT are different.

In step S12, the OLT generates at least one PLOAM message according to the absolute ToD information and based on PLOAM message format, and broadcasts the at least one PLOAM message to ONUs.

In some embodiments, the at least one PLOAM message includes all or part of the absolute ToD information. In some embodiments, the value of N in the value pair corresponding to each domain is different, the at least one PLOAM message may include: the values of N and TstampN corresponding to the main domain, the values of TstampN corresponding to each domain other than the main domain; in some embodiments, the value of N in the value pair corresponding to each domain is the same, the at least one PLOAM message may include: the values of N and TstampN corresponding to each domain. In some embodiments, the number of PLOAM messages generated is determined by the number of domains and the domain number corresponding to each PLOAM message.

Preferably, the method further includes step S13, and the step S12 further includes step S121.

In step S13, the OLT identifies frequency offset information relative to a main domain of each of multiple domains except the main domain.

In some embodiments, the main frequency domain is still transmitted according to the method defined by the ITU-T standard, that is, the main frequency domain is still transmitted via xPON 8 KHz.

In some embodiments, for each of the multiple domains except the main domain, the frequency offset information relative to the main domain of the domain is identified, the frequency offset information relative to the main domain of one domain indicating a frequency offset between the domain and the main domain. For example, an OLT supports the following 3 frequency and ToD domains: main domain, domain2, and domain3, wherein the frequency corresponding to the main domain is 8KHz, the OLT identifies frequency offset information f1 relative to the main domain of domain2 and frequency offset information f2 relative to the main domain of domain3.

In step S121, the OLT generates at least one PLOAM message according to the frequency offset information and the absolute ToD information, and based on PLOAM message format.

In some embodiments, the at least one PLOAM message includes the frequency offset information and the absolute ToD information; in some embodiments, the at least one PLOAM message includes the frequency offset information, and includes partial information in the absolute ToD information. In some embodiments, the value of N in the value pair corresponding to each domain is different, the at least one PLOAM message may include: the frequency offset information, the values of N and TstampN corresponding to the main domain, and the values of TstampN corresponding to each domain except the main domain; in some embodiments, the value of N in the value pair corresponding to each domain is the same, the at least one PLOAM message may include: the frequency offset information, the values of N and TstampN corresponding to each domain.

As an example, assume that an OLT supports two domains, namely main domain and domain2, and uses extended PLOAM message format as shown in Table 1 below to transmit the frequency offset information and the absolute ToD information:

**Table 1**

| **Octet** | **Content** | **Description** |
|---|---|---|
| 1-2 | ONU-ID | 0x03FF, Broadcast ONU-ID |
| 3 | Message type ID | 0xxx, "PLOAM message type" |
| 4-7 | Superframe Number (main domain) | the sequence number of the specified GEM superframe |
| 8-17 | The timestamp of SuperframeNumber (main domain) | TstampN as defined in clause 10.4.6 of [ITU-T G.984.3], clause 13.2 of [ITU-T G.9807.1] and clause 13.2 of [ITU-T G.989.3], using the timestamp format of clause 5.3.3 of [IEEE 1588] |
| 18-21 | Superframe Number (domain2) | the sequence number of the specified GEM superframe |
| 22-31 | The timestamp of SuperframeNumber (domain2) | TstampN as defined in clause 10.4.6 of [ITU-T G.984.3], clause 13.2 of [ITU-T G.9807.1] and clause 13.2 of [ITU-T G.989.3], using the timestamp format of clause 5.3.3 of [IEEE 1588] |
| 32-35 | Freq offset (domain2) | Frequency offset between main domain and domain2 |
| 36-40 | Padding | Set to 0x00 by the transmitter; treated as "don't care" by the receiver |
| 41-48 | MIC | Message integrity check, computed using the default PLOAM integrity key |

Wherein, "Octet" represents byte, "Content" represents contents corresponding to the corresponding byte, and "Description" represents description of the corresponding byte. As shown in Table 1, in the PLOAM message format, bytes 1-2 correspond to ONU-ID, that is, ONU identifier of broadcast type; byte 3 corresponds to Message type identifier (Message type ID), the Message type is "PLOAM Message type", and its hexadecimal representation is "0xxx"; bytes 4-7 correspond to the Superframe Number of the main domain (that is, the value of N in the value pair corresponding to the main domain), bytes 8-17 correspond to the timestamp of the Superframe Number of the main domain (that is, the value of TstampN in the value pair corresponding to the main domain); bytes 18-21 correspond to the superframe sequence number of domain2 (that is, the value of N in the value pair corresponding to domain2), bytes 22-31 correspond to the timestamp of the superframe sequence number of domain2 (that is, the value of TstampN in the value pair corresponding to domain2); bytes 32-35 correspond to the frequency offset between domain2 and the main domain; bytes 36-40 correspond to Padding content, which is set to 0x00 by the transmitter and treated as "don't care" by the receiver; bytes 41-48 correspond to MIC (Message integrity check), which is computed using the default PLOAM integrity key.

It should be noted that, based on the above example, if the number of domains supported by the OLT is more, an extension similar to that in Table 1 may be used to introduce one or more new PLOAM messages, for example, an OLT supports 3 domains, namely main domain, domain2, and domain3, then one PLOAM message is generated by using the PLOAM message format in Table 1, and another PLOAM message is generated through similar extension, the another PLOAM message includes: ONU-ID, message type identification, the value of N in a value pair corresponding to domain3, the value of TstampN in a value pair corresponding to domain3, frequency offset between domain3 and main domain, padding and MIC. In some embodiments, the extension mode of PLOAM messages and the required number of PLOAM messages may be determined based on the number of domains supported by the OLT.

It should be noted that, the PLOAM message format in the above example includes the values of N corresponding to other domains except the main domain, this example is applicable to the case that the value of N in the value pair corresponding to each domain is different. If the value of N in the value pair corresponding to each domain is the same, the extended PLOAM message format may not include the value of N corresponding to other domains except the main domain, and in practical application, different PLOAM message formats may be defined based on the same or different value of N.

It should be noted that, the extension manner in table 1 is only an example and is not a limitation to the present disclosure, and any implementation manner that implements transmission by extending PLOAM message should be included in the protection scope of the present disclosure.

In some embodiments, the method further comprises: sending an OMCI message to the optical network units, wherein the OMCI message is used for indicating the available domain of each optical network unit.

Fig. 2 shows a flowchart of a method for multi-domain transmission in an optical line terminal according to another embodiment of the present disclosure. Wherein the optical line terminal supports multiple domains. The method according to the present embodiment includes step S21 and step S22. In step S21, OLT obtains relative ToD information corresponding to the multiple domains according to the phase information of each domain in the multiple domains, wherein the relative ToD information comprises a value pair distributed for the main domain and the phase deviation relative to the main domain of each domain except the main domain, the value pair comprises a superframe sequence number corresponding to the main domain and a timestamp of the superframe sequence number; in step S22, the OLT generates at least one PLOAM message according to the relative ToD information and based on the extended PLOAM message format, and broadcasts the at least one PLOAM message to ONUs.

In step S21, OLT obtains relative ToD information corresponding to the multiple domains according to the phase information of each domain in the multiple domains, wherein the relative ToD information comprises a value pair distributed for a main domain in the multiple domains and the phase deviation relative to the main domain of each domain except the main domain, the value pair comprises a superframe sequence number corresponding to the main domain and a timestamp of the superframe sequence number.

In some embodiments, the OLT distributes a value pair for the main domain according to the phase information corresponding to the main domain, the value pair includes a superframe sequence number corresponding to the main domain and a timestamp of the superframe sequence number; for each domain in the multiple domains except the main domain, a phase deviation of the domain relative to the main domain is detected. That is, the main ToD domain still implements transmission using the value pair defined by the ITU-T standard, while for ToD domains except the main ToD domain, transmission is implemented by identifying phase deviations of the other ToD domains relative to the main domain. For example, an OLT supports the following 3 frequency and ToD domains: main domain, domain2, and domain3, assigning a value pair (N, TstampN) to the main domain according to the phase information of the main domain, and then measuring the phase deviation of domain2 relative to the main domain and the phase deviation of domain3 relative to the main domain according to the phase information of domain2 and domain 3.

In step S22, the OLT generates at least one PLOAM message according to the relative ToD information and based on the extended PLOAM message format, and broadcasts the at least one PLOAM message to ONUs. In some embodiments, the at least one PLOAM message includes the relative ToD information.

In some embodiments, the method further comprises step S23, and the step S22 further comprises step S221.

In the step S23, the OLT identifies frequency offset information relative to a main domain of each of the multiple domains except the main domain. The implementation of the step S23 is the same as or similar to the foregoing step S13, and will not be repeated here.

In step S221, the OLT generates at least one PLOAM message according to the frequency offset information and the relative ToD information and based on PLOAM message format. In some embodiments, the at least one PLOAM message includes the relative ToD information and the frequency offset information.

As an example, assume that the OLT supports three domains, namely main domain, domain2, domain3, the frequency offset information and relative ToD information are transmitted in an extended PLOAM message format as shown in Table 2 below:

**Table 2**

| **Octet** | **Content** | **Description** |
|---|---|---|
| 1-2 | ONU-ID | 0x03FF, Broadcast ONU-ID |
| 3 | Message type ID | 0xxx, "PLOAM message type" |
| 4-7 | Superframe Number (main domain) | the sequence number of the specified GEM superframe |
| 8-17 | The timestamp of Superframe Number (main domain) | TstampN as defined in clause 10.4.6 of [ITU-T G.984.3], clause 13.2 of [ITU-T G.9807.1] and clause 13.2 of [ITU-T G.989.3], using the timestamp format of clause 5.3.3 of [IEEE 1588] |
| 18-21 | The phase deviation between main domain and domain2 | Time deviation using the timestamp format of clause 5.3.3 of [IEEE 1588] |
| 22-25 | Freq offset (domain2) | Frequency offset between main domain and domain2 |
| 26-29 | The phase deviation between main domain and domain3 | Time deviation using the timestamp format of clause 5.3.3 of [IEEE 1588] |
| 30-33 | Freq offset (domain3) | Frequency offset between main domain and domain3 |
| 34-40 | Padding | Set to 0x00 by the transmitter; treated as "don't care" by the receiver |
| 41-48 | MIC | Message integrity check, computed using the default PLOAM integrity key |

As shown in Table 2, in the PLOAM message format, bytes 1-2 correspond to ONU-ID; byte 3 corresponds to Message type identification (Message type ID); bytes 4-7 correspond to the superframe sequence number of the main domain, bytes 8-17 corresponding to the timestamp of the superframe sequence number of the main domain; bytes 18-21 correspond to the phase deviation between domain2 and main domain, bytes 22-25 correspond to the frequency offset information between domain2 and main domain, bytes 26-29 correspond to the phase deviation between domain3 and main domain, bytes 30-33 correspond to frequency offset information between domain3 and main domain; bytes 34-40 correspond to Padding content, which is set to 0x00 by the transmitter and treated as "don't care" by the receiver; bytes 41-48 correspond to MIC (Message integrity check), which is computed using the default PLOAM integrity key.

It should be noted that, based on the above example, if the number of domains supported by the OLT is more, an extension similar to that in Table 2 may be used to introduce one or more new PLOAM messages, for example, if the OLT supports 4 domains, namely main domain, domain2, domain3 and domain4, then one PLOAM message is generated in the form of the PLOAM message in Table 2, and another PLOAM message is generated through the similar extensions, the another PLOAM message includes: ONU-ID, message type identification, phase deviation between domain4 and main domain, frequency offset between domain4 and main domain, padding, and MIC. In some embodiments, the extension mode of the PLOAM messages and the required number of PLOAM messages may be determined based on the number of domains supported by the OLT.

It should be noted that, the extension manner in Table 2 is only an example and is not a limitation to the present disclosure, and any implementation manner that implements transmission by extending PLOAM message should be included in the protection scope of the present disclosure.

In some embodiments, the method further comprises: sending an OMCI message to the optical network units, wherein the OMCI message is used for indicating the available domain of each optical network unit.

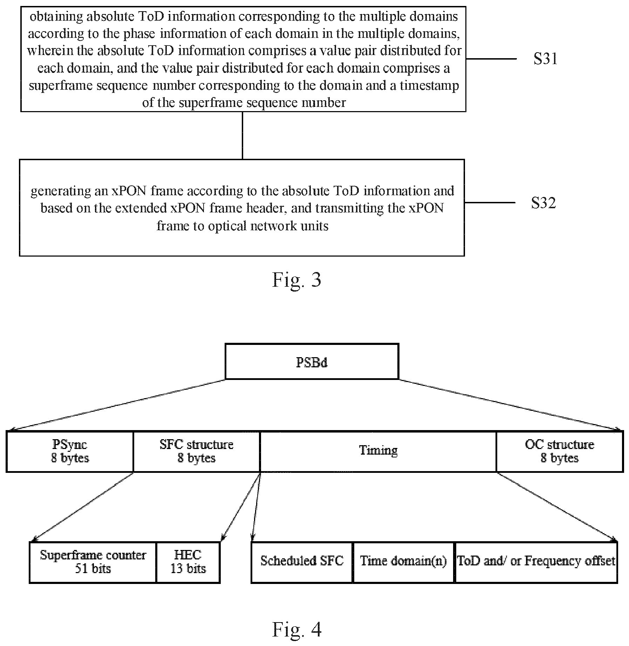

Fig. 3 shows a flowchart of a method for multi-domain transmission in an optical line terminal according to another embodiment of the present disclosure. Wherein the optical line terminal supports multiple domains. The method according to the present embodiment includes step S31 and step S32. In step S31, the OLT obtains absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number; in step S32, the OLT generates an xPON frame according to the absolute ToD information and based on the extended xPON frame header, and transmits the xPON frame to ONUs.

Wherein, the implementation manner of the step S31 is the same as or similar to the foregoing step S11, and will not be repeated here.

In step S32, the OLT generates an xPON frame according to the absolute ToD information and based on the extended xPON frame header, and transmits the xPON frame to ONUs. In some embodiments, the xPON frame may be generated by extending the physical synchronization block downstream or XGTC frame header downstream, and transmitted to ONUs. In some embodiments, the extended xPON frame header is used to carry all or part of the absolute ToD information. In some embodiments, the header of the generated xPON frame includes: the value of N and TstampN corresponding to the main domain, and the value of TstampN corresponding to each domain except the main domain. In some embodiments, the header of the generated xPON frame includes: the value of N and TstampN corresponding to each domain.

In some embodiments, the extended xPON header is specific-length Physical Synchronization Block downstream (PSBd), and the step S32 includes: generating an xPON frame according to the absolute ToD information and based on the specific-length physical synchronization block downstream, and transmitting the xPON frame to optical network units, wherein the specific-length physical synchronization block downstream comprises an extended timing field, the timing field is used for indicating the absolute ToD information. In some embodiments, the timing field is used to carry: the value of N and TstampN corresponding to the main domain, and the value of TstampN corresponding to each domain except the main domain. In some embodiments, the timing field is used to carry: the value of N and TstampN corresponding to each domain. In some embodiments, the length of physical synchronization block downstream is predefined according to the number of the domains actually supported by OLT, and the length of physical synchronization block downstream may be redefined if the number of the domains supported by OLT changes.

As an example, the extended physical synchronization block downstream includes: physical Synchronization Sequence (PSync), superframe structure (SFC structure), Timing, operation control structure (OC structure); Wherein, the timing field is an extended field of this disclosure, in some embodiments, the value of N in the value pair distributed for each domain is different, the timing field includes the value pair distributed for each domain, in other embodiments, the value of N in the value pair distributed for each domain is the same, the timing field includes the value pair distributed for the main domain and the value of TstampN in the value pair distributed for each domain except the main domain.

In some embodiments, the extended xPON frame header is a variable-length XGTC frame header, and the step S32 comprises: generating an xPON frame according to the absolute ToD information and based on the variable-length XGTC frame header, and transmitting the xPON frame to optical network units, wherein the variable-length XGTC frame header comprises an extended timing field and a timing length field, the timing field is used for indicating the absolute ToD information, and the timing length is used for indicating the length of the timing field. In some embodiments, the timing field is used to carry: the value of N and TstampN corresponding to the main domain, and the value of TstampN corresponding to each domain except the main domain. In some embodiments, the timing field is used to carry: the value of N and TstampN corresponding to each domain. For example, a Timing field is extended in the existing XGTC frame Header to indicate the ToD information, and a Timing Length field is extended in the Header Length (HLend) field in the existing XGTC frame Header to indicate the length of the Timing field (the length of the Timing field is variable, and thus, the length of the XGTC frame Header is also variable).

In some embodiments, the method further comprises step S33, and the step S32 further comprises step S321.

In the step S33, the OLT identifies frequency offset information relative to a main domain of each of the multiple domains except the main domain. The implementation of the step S33 is the same as or similar to the step S13, and will not be repeated here.

In step S321, the OLT generates an xPON frame according to the frequency offset information and the absolute ToD information and based on the extended xPON frame header, and transmits the xPON frame to optical network units.

In some embodiments, the extended xPON frame header is a fixed-length physical synchronization block downstream, the current xPON 8KHz mechanism is used to transmit the frequency associated with the main domain to ONUs, and for the frequency offset information corresponding to the non-main domain and the absolute ToD information associated with all domains (i.e. the value pair distributed for each domain), a value set is allocated, which is used to indicate the frequency offset information corresponding to the non-main domain and the absolute ToD information associated with all domains, for example, the value set includes: Scheduled SFC (this field may not exist), Timing domain, TOD and/or Frequency offset. Fig. 4 shows a schematic diagram of extending physical synchronization block downstream according to an example of the present disclosure, where PSBd includes PSync (8 bytes), SFC structure (8 bytes), Timing (the length of this field is a predefined fixed length), OC structure (8 bytes), where the SFC structure further includes Superframe counter (51 bytes) and HEC (Hybrid Error Correction, 13 bits), the Timing field further includes Scheduled SFC, Timing domain(n),ToD and/or Frequency offset, the Timing field corresponds to the above-mentioned value set allocated to each domain. Wherein, Scheduled SFC is used to indicate the value of the target superframe counter, that is, the value of N mentioned above, since the value of N in the value pair corresponding to each domain is the same, the optical network unit can obtain the value of N through this field, optionally, there are the following three situations: first, the field does not exist, ONU may obtain the value of N by adding a default value to the superframe counter value (i.e. the value of the Superframe counter field shown in Fig. 4) in the current downstream frame; 2) the field is an offset value, ONU can obtain the value of N by adding the value of this field to the value of the superframe counter in the current downstream frame; 3) the field is the value of the target superframe counter, ONU directly reads the value in this field and takes the value as the value of N. Wherein, the Timing domain field is used to identify each domain, for example, the Timing domain includes n values, and each value is used to identify a different domain. Wherein, the "ToD and/or Frequency offset" field is used to carry the value of TstampN in the value pair corresponding to each domain and the frequency offset between each domain except the main domain and the main domain.

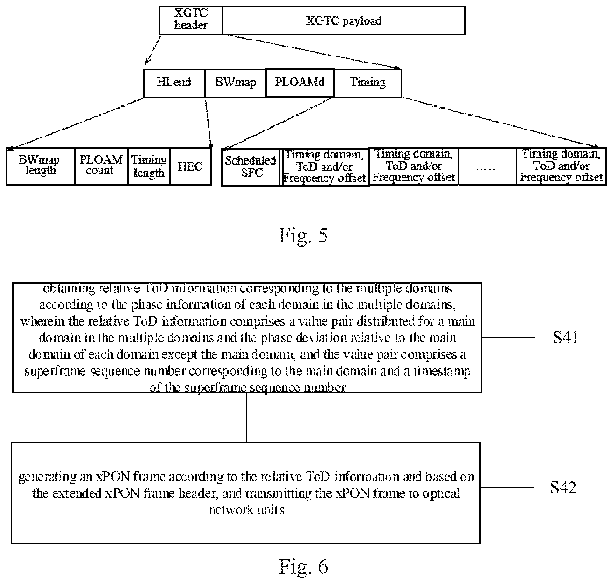

In some embodiments, the extended xPON frame header is a variable-length XGTC frame header, the current xPON 8KHz mechanism is used to transmit the frequency associated with the main domain to ONUs, and for the frequency offset information corresponding to the non-main domain and the absolute ToD information associated with all domains (i.e. the value pair distributed for each domain), a scheduled SFC and a value set corresponding to each domain are allocated, the value set corresponding to each domain includes the following contents corresponding to the set: timing domain, TOD and/or frequency offset. Fig. 5 shows a schematic diagram of extending XGTC frame header according to an example of the present disclosure, the XGTC frame includes XGTC Header and XGTC payload, as shown in Fig. 5, the XGTC Header is extended to include Hlend (Header Length), BWmap (Bandwidth Map), PLOAMd (PLOAM downstream), and Timing, the Hlend field further includes BWmap length, PLOAM count, Timing length, HEC, the Timing field further includes Scheduled SFC and "Timing domain, ToD and/or Timing offset" field corresponding to each domain, the definition of the Scheduled SFC field is the same as that of the field in Fig. 4, and "Timing domain, ToD and/or Timing offset" field corresponding to a domain includes the value of TstampN in the value pair corresponding to the domain and the frequency offset between the domain and the main domain.

In some embodiments, the method further comprises: sending an OMCI message to the optical network units, wherein the OMCI message is used for indicating the available domain of each optical network unit.

Fig. 6 shows a flowchart of a method for multi-domain transmission in an optical line terminal according to another embodiment of the present disclosure. Wherein the optical line terminal supports multiple domains. The method according to the present embodiment includes step S41 and step S42. In step S41, OLT obtains relative ToD information corresponding to the multiple domains according to the phase information of each domain in the multiple domains, wherein the relative ToD information domain in the multiple a value pair distributed for a main domain in the multiple domains and the phase deviation relative to the main domain of each domain except the main domain, and the value pair comprises a superframe sequence number corresponding to the main domain and a timestamp of the superframe sequence number; in step S42, the OLT generates an xPON frame according to the relative ToD information and based on the extended xPON frame header, and transmits the xPON frame to ONUs.

The implementation manner of the step S41 is the same as or similar to the foregoing step S11, and will not be repeated here.

In step S42, the OLT generates an xPON frame according to the relative ToD information and based on the extended xPON frame header, and transmits the xPON frame to ONUs.

In some embodiments, the extended xPON frame header is a specific-length physical synchronization block downstream, and the step S42 includes: generating an xPON frame according to the relative ToD information and based on the specific-length physical synchronization block downstream, and transmitting the xPON frame to optical network units, wherein the specific-length physical synchronization block downstream comprises an extended timing field, the timing field is used for indicating the relative ToD information.

In some embodiments, the extended xPON frame header is a variable-length XGTC frame header, and step S42 further includes: generating an xPON frame according to the relative ToD information and based on the variable-length XGTC frame header, and transmitting the xPON frame to optical network units, wherein the variable-length XGTC frame header comprises an extended timing field and a timing length field, the timing field is used for indicating the relative ToD information, and the timing length is used for indicating the length of the timing field.

Preferably, the method further includes step S43, and the step S42 further includes step S421.

In step S43, the OLT identifies frequency offset information relative to the main domain of each of the multiple domains except the main domain. The implementation of the step S43 is the same as or similar to the foregoing step S13, and will not be repeated herein.

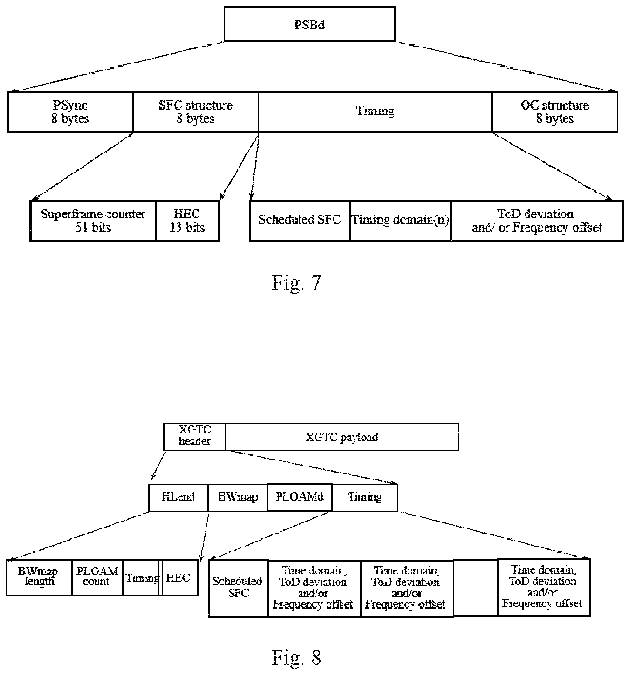

In step S421, the OLT generates an xPON frame according to the frequency offset information and the relative ToD information and based on the extended xPON frame header, and transmits the xPON frame to ONUs. In some embodiments, the extended xPON frame header is a fixed-length physical synchronization block downstream, the current xPON 8KHz mechanism is used to transmit the frequency associated with the main domain to ONUs, and the OMCI (ONU Management and Control Interface) mechanism is used to transmit the phase associated with the main domain to ONUs, and for the frequency offset information and the relative ToD information corresponding to the non-main domain (i.e. the phase deviation of each non-main domain relative to the main domain), a value set is allocated, which is used to indicate the frequency offset information and the relative ToD information corresponding to the non-main domain, for example, the value set includes: Scheduled SFC, timing domain, TOD deviation and/or frequency offset. Fig. 7 shows a schematic diagram of extending a physical synchronization block downstream according to another example of the present disclosure, where the PSBd includes PSync, SFC structure, Timing, OC structure, where the SFC structure further includes Superframe counter and HEC, the Timing field further includes Scheduled SFC, Timing domain (n), ToD deviation and/or Frequency offset, the Timing field corresponds to the above value set allocated for each domain. Wherein, Scheduled SFC field is defined the same as that in Fig. 4, and the "ToD deviation and/or Frequency offset" field includes phase deviation and Frequency offset between each non-main domain and the main domain.

In some embodiments, the extended xPON frame header is a variable-length XGTC frame header, the current xPON 8KHz mechanism is used to transmit the frequency associated with the main domain to ONUs, the OMCI mechanism is used to transmit the phase associated with the main domain to ONUs, and for the frequency offset information and relative ToD information corresponding to the non-main domain (i.e. the phase deviation of each non-main domain relative to the main domain), a scheduled SFC and a value set corresponding to each domain are allocated, the value set corresponding to each domain including the following contents corresponding to the set: timing domain, TOD deviation and/or frequency offset. Fig. 8 shows a schematic diagram of extending an XGTC frame header according to another example of the present disclosure, the XGTC frame includes XGTC header and XGTC payload, as shown in Fig. 8, the XGTC header is extended to include Hlend, BWmap, PLOAMd, Timing, the Hlend field further includes BWmap length, PLOAM count, Timing length, HEC, the Timing field further includes Scheduled SFC and "Timing domain, ToD deviation and/or Frequency offset" field corresponding to each domain, where the definition of the Scheduled SFC field is the same as that of the field in Fig. 4, and "Timing domain, ToD deviation and/or Frequency offset" corresponding to each domain includes the phase deviation and Frequency offset between the domain and the main domain.

In some embodiments, the method further comprises: the OLT sends an OMCI message to the ONUs, wherein the OMCI message is used for indicating the available domain of each ONU.

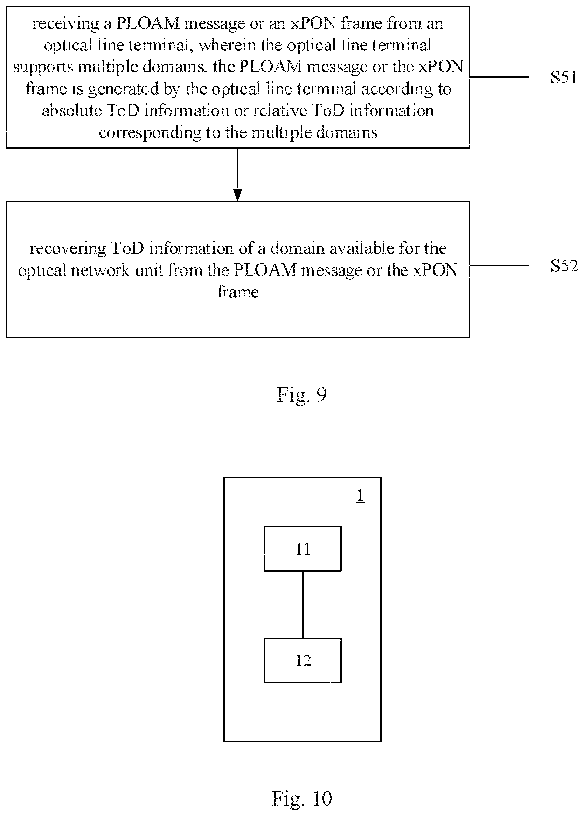

Fig. 9 shows a flowchart of a method for multi-domain transmission in an optical network unit according to an embodiment of the present disclosure. The method according to the present embodiment includes step S51 and step S52. In step S51, an optical network unit receives a PLOAM message or an xPON frame from an optical line terminal, wherein the optical line terminal supports multiple domains, the PLOAM message or the xPON frame is generated by the optical line terminal according to absolute ToD information or relative ToD information corresponding to the multiple domains; in step S52, the optical network unit recovers ToD information corresponding to the domain available for the optical network unit from the PLOAM message or the xPON frame.

In step S51, an optical network unit receives a PLOAM message or an xPON frame from an optical line terminal, wherein the optical line terminal supports multiple domains, the PLOAM message or the xPON frame is generated by the optical line terminal according to absolute ToD information or relative ToD information corresponding to the multiple domains. The implementation manner of generating the PLOAM message or the xPON frame according to the absolute ToD information corresponding to the multiple domains and generating the PLOAM message or the xPON frame according to the relative ToD information corresponding to the multiple domains is described in detail in the foregoing embodiments, and will not be described herein again. In some embodiments, an OLT broadcasts PLOAM message or xPON frame to all ONUs connected to the OLT, and an ONU determine whether to receive the PLOAM message or the xPON frame based on the ONU identifiers.

In step S52, the optical network unit recovers ToD information corresponding to the domain available for the optical network unit from the PLOAM message or the xPON frame. In some embodiments, the optical line terminal generates one or more PLOAM messages by extending PLOAM message, and the optical network unit recovers ToD information corresponding to the domain available to the optical network unit from the received PLOAM messages according to the extended PLOAM message format. In some embodiments, the optical line terminal generates the xPON frame by extending xPON frame header, and the optical network unit recovers ToD information corresponding to the domain available for the optical network unit from the frame header of the received xPON frame according to the extended xPON frame header format. In some embodiments, the optical network unit receives phase associated with the main domain based on OMCI mechanism, and obtains the phase deviation of its available domain relative to the main domain from the received PLOAM message or xPON frame, and then recovers ToD information corresponding to its available domain based on the phase associated with the main domain and the phase deviation.

In some embodiments, the PLOAM message or xPON frame is generated by the optical line terminal according to the absolute ToD information or relative ToD information, and frequency offset information relative to a main domain of each of the multiple domains except the main domain; wherein the method further comprises: recovering the frequency information of the domain available for the optical network unit from the PLOAM message or the xPON frame. In some embodiments, the optical line terminal generates one or more PLOAM messages by extending PLOAM message, then the optical network unit recovers frequency information corresponding to its available domain from the received PLOAM messages according to the extended PLOAM message format. In some embodiments, the optical line terminal generates the xPON frame by extending xPON frame header, then the optical network unit recovers the frequency information corresponding to its available domain from the frame header of the received xPON frame according to the extended xPON frame header format. In some embodiments, the optical network unit receives the frequency associated with the main domain from the optical line terminal based on the current xPON 8KHz mechanism, obtains the frequency offset information of its available domain relative to the main domain from the received PLOAM message or xPON frame, and recovers the frequency information corresponding to its available domain according to the frequency associated with the main domain and the frequency offset information.

In some embodiments, the optical network unit receives an OMCI message sent by an optical line terminal, wherein the OMCI message is used for indicating the available domain of each optical network unit; and then, the optical network unit recovers ToD information corresponding to its available domain from the received PLOAM message or xPON frame according to the OMCI message. In some embodiments, the optical network unit may further recover, according to the OMCI message, the frequency message corresponding to its available domain from the received PLOAM message or xPON frame. The above embodiments may be combined with each other.

Fig. 10 shows a structural diagram of a first apparatus for multi-domain transmission in an optical line terminal according to an embodiment of the present disclosure. Wherein the optical line terminal supports multiple domains, in some embodiments, the multiple domains are also described as multiple ToD domains or multiple Frequency and ToD domains. The first apparatus 1 according to the present embodiment includes a first obtaining means 11 and a first transmitting means 12.

The first obtaining means 11 is used to obtain absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number.

In some embodiments, the multiple domains include a main domain and at least one other domain (hereinafter also possibly referred to as "non-main domain"), the main domain may also be referred to as "main frequency domain" or "main ToD domain" in the context. In some embodiments, the main ToD domain is still transmitted according to the value pair (N, TstampN) defined by xPON standard, where N represents superframe sequence number and TstampN represents timestamp corresponding to N, and the scheme of the value pair defined by the existing xPON standard for the unique ToD domain is extended to the case of multiple domains, that is, the ToD information corresponding to other domains except the main domain is also represented as the value pair consisting of superframe sequence number and timestamp. In some embodiments, for each domain in the multiple domains, a value pair is distributed for the domain according to the phase information corresponding to the domain, where the value pair includes a superframe sequence number corresponding to the domain and a timestamp of the superframe sequence number. In some embodiments, the value pair distributed for each domain may be represented in the form of (N, TstampN) as mentioned above, where N represents a superframe sequence number corresponding to the corresponding domain, TstampN represents a timestamp of the superframe sequence number corresponding to the corresponding domain, and each value pair is used to identify a different domain, that is, the main ToD domain still implements transmission using the value pair defined by the ITU-T standard, and extends the existing scheme of defining the value pair of ToD domain to other ToD domains other than the main domain. In some embodiments, each of the multiple domains supported by the OLT shares the same value of N, but the value of TstampN corresponding to each domain is different; in some embodiments, the values of N and TstampN corresponding to each of the multiple domains supported by the OLT are different.

The first transmitting means 12 is used to generate at least one PLOAM message according to the absolute ToD information and based on PLOAM message format, and broadcasts the at least one PLOAM message to ONUs.

In some embodiments, the at least one PLOAM message includes all or part of the absolute ToD information. In some embodiments, the value of N in the value pair corresponding to each domain is different, the at least one PLOAM message may include: the values of N and TstampN corresponding to the main domain, the values of TstampN corresponding to each domain other than the main domain; in some embodiments, the value of N in the value pair corresponding to each domain is the same, the at least one PLOAM message may include: the values of N and TstampN corresponding to each domain. In some embodiments, the number of PLOAM messages generated is determined by the number of domains and the domain number corresponding to each PLOAM message.

Preferably, the first apparatus 1 further includes a first identifying means (not shown), and the first transmitting means 12 further includes a first transmitting unit (not shown). Wherein, the first identifying means 13 is used to identify frequency offset information relative to a main domain of each of multiple domains except the main domain.

In some embodiments, the main frequency domain is still transmitted according to the method defined by the ITU-T standard, that is, the main frequency domain is still transmitted via xPON 8 KHz.

In some embodiments, for each of the multiple domains except the main domain, the frequency offset information relative to the main domain of the domain is identified, the frequency offset information relative to the main domain of one domain indicating a frequency offset between the domain and the main domain. For example, an OLT supports the following 3 frequency and ToD domains: main domain, domain2, and domain3, wherein the frequency corresponding to the main domain is 8KHz, the OLT identifies frequency offset information f1 relative to the main domain of domain2 and frequency offset information f2 relative to the main domain of domain2.

The first transmitting unit is used to generate at least one PLOAM message according to the frequency offset information and the absolute ToD information, and based on the extended PLOAM message format, and broadcasts the at least one PLOAM message to optical network units.

In some embodiments, the at least one PLOAM message includes the frequency offset information and the absolute ToD information; in some embodiments, the at least one PLOAM message includes the frequency offset information, and includes partial information in the absolute ToD information. In some embodiments, the value of N in the value pair corresponding to each domain is different, the at least one PLOAM message may include: the frequency offset information, the values of N and TstampN corresponding to the main domain, and the values of TstampN corresponding to each domain except the main domain; in some embodiments, the value of N in the value pair corresponding to each domain is the same, the at least one PLOAM message may include: the frequency offset information, the values of N and TstampN corresponding to each domain.

As an example, assume that an OLT supports two domains, namely main domain and domain2, and uses extended PLOAM message format as shown in Table 1 above to transmit the frequency offset information and the absolute ToD information. The contents related to Table 1 have been described in detail in the above-mentioned embodiment and will not be repeated here.

In some embodiments, the first apparatus 1 further includes a means (not shown) for sending an OMCI message to the optical network units, wherein the OMCI message is used for indicating the available domain of each optical network unit.

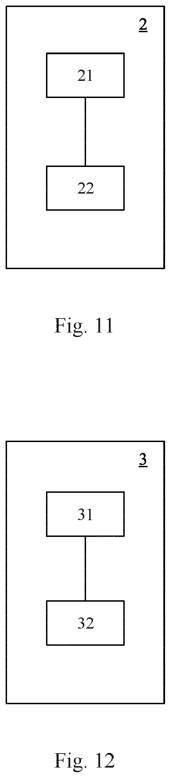

Fig. 11 shows a structural diagram of a second apparatus for multi-domain transmission in an optical line terminal according to another embodiment of the present disclosure. Wherein the optical line terminal supports multiple domains. The second apparatus 2 according to the present embodiment includes a second obtaining means 21 and a second transmitting means 22.

The second obtaining means 21 is used to obtain relative ToD information corresponding to the multiple domains according to the phase information of each domain in the multiple domains, wherein the relative ToD information comprises a value pair distributed for a main domain in the multiple domains and the phase deviation relative to the main domain of each domain except the main domain, the value pair comprises a superframe sequence number corresponding to the main domain and a timestamp of the superframe sequence number.

In some embodiments, the second obtaining means 21 distributes a value pair for the main domain according to the phase information corresponding to the main domain, the value pair includes a superframe sequence number corresponding to the main domain and a timestamp of the superframe sequence number; for each domain in the multiple domains except the main domain, a phase deviation of the domain relative to the main domain is detected. That is, the main ToD domain still implements transmission using the value pair defined by the ITU-T standard, while for ToD domains except the main ToD domain, transmission is implemented by identifying phase deviations of the other ToD domains relative to the main domain. For example, an OLT supports the following 3 frequency and ToD domains: main domain, domain2, and domain3, assigning a value pair (N, TstampN) to the main domain according to the phase information of the main domain, and then measuring the phase deviation of domain2 relative to the main domain and the phase deviation of domain3 relative to the main domain according to the phase information of domain2 and domain 3.

The second transmitting means 22 is used to generate at least one PLOAM message according to the relative ToD information and based on the extended PLOAM message format, and broadcasts the at least one PLOAM message to ONUs. In some embodiments, the at least one PLOAM message includes the relative ToD information. In some embodiments, the second apparatus 2 further includes a second identifying means (not shown), and the second transmitting means 22 further includes a second transmitting unit.

Wherein, the implementation of the second identifying means is the same as or similar to the foregoing first identifying means, and will not be repeated here.

Wherein, the second transmitting unit is used to generate at least one PLOAM message according to the frequency offset information and the relative ToD information and based on PLOAM message format. In some embodiments, the at least one PLOAM message includes the relative ToD information and the frequency offset information.

As an example, assume that the OLT supports three domains, namely main domain, domain2, domain3, the frequency offset information and relative ToD information are transmitted in an extended PLOAM message format as shown in Table 2 above. The contents related to Table 1 have been described in detail in the above-mentioned embodiment and will not be repeated here.

In some embodiments, the second apparatus 2 further includes a means (not shown) for sending an OMCI message to the optical network units, wherein the OMCI message is used for indicating the available domain of each optical network unit.

Fig. 12 shows a structural diagram of a third apparatus for multi-domain transmission in an optical line terminal according to another embodiment of the present disclosure. Wherein the optical line terminal supports multiple domains. The third apparatus 3 according to the present embodiment includes a third obtaining means 31 and a third transmitting means 32. Wherein, the implementation of the third obtaining means 31 is the same as or similar to the foregoing first obtaining means 11, and will not be repeated here.

The third transmitting means 32 is used to generate an xPON frame according to the absolute ToD information and based on the extended xPON frame header, and transmits the xPON frame to ONUs. In some embodiments, the xPON frame may be generated by extending the physical synchronization block downstream or XGTC frame header downstream, and transmitted to ONUs. In some embodiments, the extended xPON frame header is used to carry all or part of the absolute ToD information. In some embodiments, the header of the generated xPON frame includes: the value of N and TstampN corresponding to the main domain, and the value of TstampN corresponding to each domain except the main domain. In some embodiments, the header of the generated xPON frame includes: the value of N and TstampN corresponding to each domain.

In some embodiments, the extended xPON header is specific-length Physical Synchronization Block downstream (PSBd), and the third transmitting means 32 is used for: generating an xPON frame according to the absolute ToD information and based on the specific-length physical synchronization block downstream, and transmitting the xPON frame to optical network units, wherein the specific-length physical synchronization block downstream comprises an extended timing field, the timing field is used for indicating the absolute ToD information. In some embodiments, the timing field is used to carry: the value of N and TstampN corresponding to the main domain, and the value of TstampN corresponding to each domain except the main domain. In some embodiments, the timing field is used to carry: the value of N and TstampN corresponding to each domain. In some embodiments, the length of physical synchronization block downstream is predefined according to the number of the domains actually supported by OLT, and the length of physical synchronization block downstream may be redefined if the number of the domains supported by OLT changes.

As an example, the extended physical synchronization block downstream includes: physical Synchronization Sequence (PSync), superframe structure (SFC structure), Timing, operation control structure (OC structure); Wherein, the timing field is an extended field of this disclosure, in some embodiments, the value of N in the value pair distributed for each domain is different, the timing field includes the value pair distributed for each domain, in other embodiments, the value of N in the value pair distributed for each domain is the same, the timing field includes the value pair distributed for the main domain and the value of TstampN in the value pair distributed for each domain except the main domain.

In some embodiments, the extended xPON frame header is a variable-length XGTC frame header, and the third transmitting means 32 is used for: generating an xPON frame according to the absolute ToD information and based on the variable-length XGTC frame header, and transmitting the xPON frame to optical network units, wherein the variable-length XGTC frame header comprises an extended timing field and a timing length field, the timing field is used for indicating the absolute ToD information, and the timing length is used for indicating the length of the timing field. In some embodiments, the timing field is used to carry: the value of N and TstampN corresponding to the main domain, and the value of TstampN corresponding to each domain except the main domain. In some embodiments, the timing field is used to carry: the value of N and TstampN corresponding to each domain. For example, a Timing field is extended in the existing XGTC frame Header to indicate the ToD information, and a Timing Length field is extended in the Header Length (HLend) field in the existing XGTC frame Header to indicate the length of the Timing field (the length of the Timing field is variable, and thus, the length of the XGTC frame Header is also variable).

In some embodiments, the third apparatus 3 further comprises a third identifying means (not shown), and the third transmitting means 32 further comprises a third transmitting unit (not shown).

The third identifying means is used to identify frequency offset information relative to a main domain of each of the multiple domains except the main domain. The implementation of the third identifying means is the same as or similar to the foregoing first identifying means, and will not be repeated here.

The third transmitting unit is used to generate an xPON frame according to the frequency offset information and the absolute ToD information and based on the extended xPON frame header, and transmits the xPON frame to optical network units.

In some embodiments, the extended xPON frame header is a specific-length physical synchronization block downstream, the current xPON 8KHz mechanism is used to transmit the frequency associated with the main domain to ONUs, and for the frequency offset information corresponding to the non-main domain and the absolute ToD information associated with all domains (i.e. the value pair distributed for each domain), a value set is allocated, which is used to indicate the frequency offset information corresponding to the non-main domain and the absolute ToD information associated with all domains, for example, the value set includes: Scheduled SFC (this field may not exist), Timing domain, TOD and/or Frequency offset. Fig. 4 shows a schematic diagram of extending physical synchronization block downstream according to an example of the present disclosure, where PSBd includes PSync (8 bytes), SFC structure (8 bytes), Timing (the length of this field is a predefined fixed length), OC structure (8 bytes), where the SFC structure further includes Superframe counter (51 bytes) and HEC (Hybrid Error Correction, 13 bits), the Timing field further includes Scheduled SFC, Timing domain(n),ToD and/or Frequency offset, the Timing field corresponds to the above-mentioned value set allocated to each domain. Wherein, Scheduled SFC is used to indicate the value of the target superframe counter, that is, the value of N mentioned above, since the value of N in the value pair corresponding to each domain is the same, the optical network unit can obtain the value of N through this field, optionally, there are the following three situations: first, the field does not exist, ONU may obtain the value of N by adding a default value to the superframe counter value (i.e. the value of the Superframe counter field shown in Fig. 4) in the current downstream frame; 2) the field is an offset value, ONU can obtain the value of N by adding the value of this field to the value of the superframe counter in the current downstream frame; 3) the field is the value of the target superframe counter, ONU directly reads the value in this field and takes the value as the value of N. Wherein, the Timing domain field is used to identify each domain, for example, the Timing domain includes n values, and each value is used to identify a different domain. Wherein, the "ToD and/or Frequency offset" field is used to carry the value of TstampN in the value pair corresponding to each domain and the frequency offset between each domain except the main domain and the main domain.

In some embodiments, the extended xPON frame header is a variable-length XGTC frame header, the current xPON 8KHz mechanism is used to transmit the frequency associated with the main domain to ONUs, and for the frequency offset information corresponding to the non-main domain and the absolute ToD information associated with all domains (i.e. the value pair distributed for each domain), a scheduled SFC and a value set corresponding to each domain are allocated, the value set corresponding to each domain includes the following contents corresponding to the set: timing domain, TOD and/or frequency offset. Fig. 5 shows a schematic diagram of extending XGTC frame header according to an example of the present disclosure, the XGTC frame includes XGTC Header and XGTC payload, as shown in Fig. 5, the XGTC Header is extended to include Hlend (Header Length), BWmap (Bandwidth Map), PLOAMd (PLOAM downstream), and Timing, the Hlend field further includes BWmap length, PLOAM count, Timing length, HEC, the Timing field further includes Scheduled SFC and "Timing domain, ToD and/or Timing offset" field corresponding to each domain, the definition of the Scheduled SFC field is the same as that of the field in Fig. 4, and "Timing domain, ToD and/or Timing offset" field corresponding to a domain includes the value of TstampN in the value pair corresponding to the domain and the frequency offset between the domain and the main domain.

In some embodiments, the third apparatus 3 further comprises a means (not shown) for sending an OMCI message to the optical network units, wherein the OMCI message is used for indicating the available domain of each optical network unit.

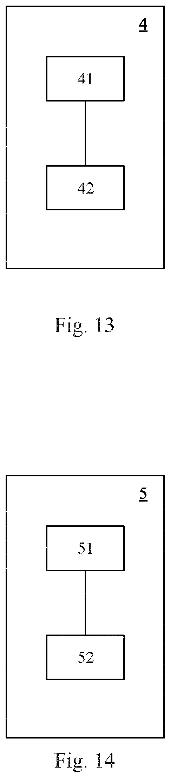

Fig. 13 shows a structural diagram of a fourth apparatus for multi-domain transmission in an optical line terminal according to another embodiment of the present disclosure. Wherein the optical line terminal supports multiple domains. The fourth apparatus 4 according to the present embodiment includes a fourth obtaining means 41 and a fourth transmitting means 42. Wherein, the implementation manner of the fourth obtaining means 41 is the same as or similar to the foregoing second obtaining means 21, and will not be repeated here.

The fourth transmitting means 42 is used to generate an xPON frame according to the relative ToD information and based on the extended xPON frame header, and transmits the xPON frame to ONUs.

In some embodiments, the extended xPON frame header is a specific-length physical synchronization block downstream, and the fourth transmitting means 42 is used for: generating an xPON frame according to the relative ToD information and based on the specific-length physical synchronization block downstream, and transmitting the xPON frame to optical network units, wherein the specific-length physical synchronization block downstream comprises an extended timing field, the timing field is used for indicating the relative ToD information.

In some embodiments, the extended xPON frame header is a variable-length XGTC frame header, and the fourth transmitting means 42 is further used for: generating an xPON frame according to the relative ToD information and based on the variable-length XGTC frame header, and transmitting the xPON frame to optical network units, wherein the variable-length XGTC frame header comprises an extended timing field and a timing length field, the timing field is used for indicating the relative ToD information, and the timing length is used for indicating the length of the timing field.

Preferably, the fourth apparatus 4 further includes a fourth identifying means (not shown), and the fourth transmitting means 42 further includes a fourth transmitting unit.

The fourth identifying means is used to identify frequency offset information relative to the main domain of each of the multiple domains except the main domain. The implementation of the fourth identifying means is the same as or similar to the foregoing first identifying means, and will not be repeated herein.

The fourth transmitting unit is used to generate an xPON frame according to the frequency offset information and the relative ToD information and based on the extended xPON frame header, and transmits the xPON frame to ONUs. In some embodiments, the extended xPON frame header is a fixed-length physical synchronization block downstream, the current xPON 8KHz mechanism is used to transmit the frequency associated with the main domain to ONUs, and the OMCI (ONU Management and Control Interface) mechanism is used to transmit the phase associated with the main domain to ONUs, and for the frequency offset information and the relative ToD information corresponding to the non-main domain (i.e. the phase deviation of each non-main domain relative to the main domain), a value set is allocated, which is used to indicate the frequency offset information and the relative ToD information corresponding to the non-main domain, for example, the value set includes: Scheduled SFC, timing domain, TOD deviation and/or frequency offset. Fig. 7 shows a schematic diagram of extending a physical synchronization block downstream according to another example of the present disclosure, where the PSBd includes PSync, SFC structure, Timing, OC structure, where the SFC structure further includes Superframe counter and HEC, the Timing field further includes Scheduled SFC, Timing domain (n), ToD deviation and/or Frequency offset, the Timing field corresponds to the above value set allocated for each domain. Wherein, Scheduled SFC field is defined the same as that in Fig. 4, and the "ToD deviation and/or Frequency offset" field includes phase deviation and Frequency offset between each non-main domain and the main domain.

In some embodiments, the extended xPON frame header is a variable-length XGTC frame header, the current xPON 8KHz mechanism is used to transmit the frequency associated with the main domain to ONUs, the OMCI mechanism is used to transmit the phase associated with the main domain to ONUs, and for the frequency offset information and relative ToD information corresponding to the non-main domain (i.e. the phase deviation of each non-main domain relative to the main domain), a scheduled SFC and a value set corresponding to each domain are allocated, the value set corresponding to each domain including the following contents corresponding to the set: timing domain, TOD deviation and/or frequency offset. Fig. 8 shows a schematic diagram of extending an XGTC frame header according to another example of the present disclosure, the XGTC frame includes XGTC header and XGTC payload, as shown in Fig. 8, the XGTC header is extended to include Hlend, BWmap, PLOAMd, Timing, the Hlend field further includes BWmap length, PLOAM count, Timing length, HEC, the Timing field further includes Scheduled SFC and "Timing domain, ToD deviation and/or Frequency offset" field corresponding to each domain, where the definition of the Scheduled SFC field is the same as that of the field in Fig. 4, and "Timing domain, ToD deviation and/or Frequency offset" corresponding to each domain includes the phase deviation and Frequency offset between the domain and the main domain.

In some embodiments, the fourth apparatus 4 further comprises a means for sending an OMCI message to the ONUs, wherein the OMCI message is used for indicating the available domain of each ONU.

Fig. 14 shows a structural diagram of a fifth apparatus for multi-domain transmission in an optical network unit according to an embodiment of the present disclosure. The fifth apparatus 5 according to the present embodiment includes a receiving means 51 and a recovering means 52.

The receiving means 51 is used to receive a PLOAM message or an xPON frame from an optical line terminal, wherein the optical line terminal supports multiple domains, the PLOAM message or the xPON frame is generated by the optical line terminal according to absolute ToD information or relative ToD information corresponding to the multiple domains. The implementation manner of generating the PLOAM message or the xPON frame according to the absolute ToD information corresponding to the multiple domains and generating the PLOAM message or the xPON frame according to the relative ToD information corresponding to the multiple domains is described in detail in the foregoing embodiments, and will not be described herein again. In some embodiments, an OLT broadcasts PLOAM message or xPON frame to all ONUs connected to the OLT, and the receiving means 51 determine whether to receive the PLOAM message or the xPON frame based on the ONU identifiers.

The recovering means 52 is used to recover ToD information corresponding to the domain available for the optical network unit from the PLOAM message or the xPON frame. In some embodiments, the optical line terminal generates one or more PLOAM messages by extending PLOAM message, and the recovering means 52 recovers ToD information corresponding to the domain available to the optical network unit from the received PLOAM messages according to the extended PLOAM message format. In some embodiments, the optical line terminal generates the xPON frame by extending xPON frame header, and the recovering means 52 recovers ToD information corresponding to the domain available for the optical network unit from the frame header of the received xPON frame according to the extended xPON frame header format. In some embodiments, the optical network unit receives phase associated with the main domain based on OMCI mechanism, and obtains the phase deviation of its available domain relative to the main domain from the received PLOAM message or xPON frame, and then recovers ToD information corresponding to its available domain based on the phase associated with the main domain and the phase deviation.

In some embodiments, the PLOAM message or xPON frame is generated by the optical line terminal according to the absolute ToD information or relative ToD information, and frequency offset information relative to a main domain of each of the multiple domains except the main domain; wherein the fifth apparatus 5 further includes a frequency recovery means (not shown), frequency recovery means is used to recover the frequency information of the domain available for the optical network unit from the PLOAM message or the xPON frame. In some embodiments, the optical line terminal generates one or more PLOAM messages by extending PLOAM message, then the frequency recovery means recovers frequency information corresponding to its available domain from the received PLOAM messages according to the extended PLOAM message format. In some embodiments, the optical line terminal generates the xPON frame by extending xPON frame header, then the frequency recovery means recovers the frequency information corresponding to its available domain from the frame header of the received xPON frame according to the extended xPON frame header format.

In some embodiments, the frequency recovery means receives the frequency associated with the main domain from the optical line terminal based on the current xPON 8KHz mechanism, obtains the frequency offset information of its available domain relative to the main domain from the received PLOAM message or xPON frame, and recovers the frequency information corresponding to its available domain according to the frequency associated with the main domain and the frequency offset information.

In some embodiments, the optical network unit also includes a means (not shown) for receiving an OMCI message sent by an optical line terminal, wherein the OMCI message is used for indicating the available domain of each optical network unit, then the recovering means 52 recovers ToD information corresponding to its available domain from the received PLOAM message or xPON frame according to the OMCI message. In some embodiments, the frequency recovery means may further recover, according to the OMCI message, the frequency message corresponding to its available domain from the received PLOAM message or xPON frame. The above embodiments may be combined with each other.

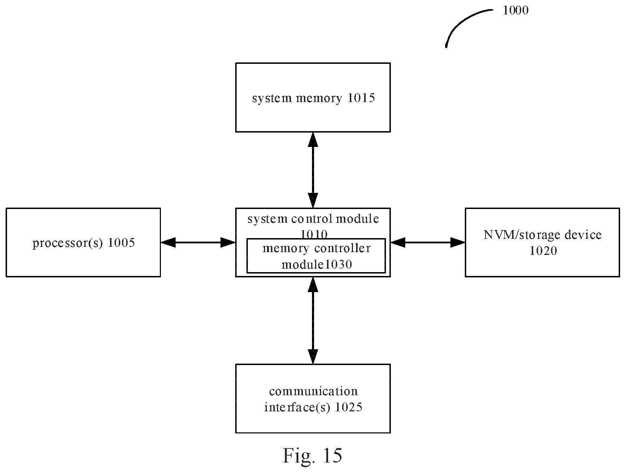

FIG. 15 shows an exemplary system that can be used to implement the various embodiments described in the present disclosure.

In some embodiments, the system 1000 can be used as any processing device in the embodiments of the present disclosure. In some embodiments, system 1000 may include one or more computer readable media (e.g., system memory or NVM/storage device 1020) having instructions and one or more processors (e.g., processor(s) 1005) coupled with the one or more computer readable media and configured to execute the instructions to implement modules to perform the actions described in the present disclosure.

For one embodiment, system control module 1010 may include any suitable interface controller to provide any suitable interface to at least one of processor(s) 1005 and/or to any suitable device or component in communication with system control module 1010.

The system control module 1010 may include a memory controller module 1030 to provide an interface to the system memory 1015. Memory controller module 1030 may be a hardware module, a software module, and/or a firmware module.

System memory 1015 may be used to load and store data and/or instructions, for example, for system 1000. For one embodiment, system memory 1015 may include any suitable volatile memory, such as suitable DRAM. In some embodiments, system memory 1015 may include a Double Data Rate type Fourth Synchronous Dynamic Random Access Memory (DDR4 SDRAM).

For one embodiment, system control module 1010 may include one or more input/output (I/O) controllers to provide an interface to NVM/storage device 1020 and communication interface(s) 1025.

For example, NVM/storage device 1020 may be used to store data and/or instructions. NVM/storage device 1020 may include any suitable non-volatile memory (e.g., flash memory) and/or may include any suitable non-volatile storage device(s) (e.g., one or more hard disk drives (HDD), one or more Compact Disc (CD) drives, and/or one or more Digital Versatile Disc (DVD) drives).

NVM/storage device 1020 may include storage resources that are physically part of the device on which system 1000 is installed, or it may be accessible by the device and not necessarily to be part of the device. For example, NVM/storage device 1020 may be accessed via the communication interface(s) 1025 through the network.

Communication interface(s) 1025 may provide an interface for system 1000 to communicate via one or more networks and/or with any other suitable devices. System 1000 may wirelessly communicate with one or more components of a wireless network according to any of one or more wireless network standards and/or protocols.

For one embodiment, at least one of the processor(s) 1005 may be packaged together with logic for one or more controller(s) (e.g., memory controller module 1030) of the system control module 1010. For one embodiment, at least one of the processor(s) 1005 may be packaged together with logic for one or more controller(s) of the system control module 1010 to form a System in Package (SiP). For one embodiment, at least one of the processor(s) 1005 may be integrated with logic for one or more controller(s) of the system control module 1010 on the same mold. For one embodiment, at least one of the processor(s) 1005 may be integrated with logic for one or more controller(s) of system control module 1010 on the same mold to form a system on chip (SoC).

In various embodiments, the system 1000 may be, but is not limited to being: a server, a workstation, a desktop computing device, or a mobile computing device (for example, a laptop computing device, a handheld computing device, a tablet, a netbook, etc.). In various embodiments, the system 1000 may have more or fewer components and/or different architectures. For example, in some embodiments, the system 1000 includes one or more cameras, a keyboard, a Liquid Crystal Display (LCD) screen (including a touch screen display), a non-volatile memory port, multiple antennas, a graphics chip, an Application Specific Integrated Circuit (ASIC), and speakers.

The present disclosure also provides an optical line terminal, where the optical line terminal comprises: a memory for storing one or more programs; one or more processors connected with the memory, the one or more programs, when executed by the one or more processors, cause the one or more processors to perform the method for multi-domain transmission described in the present disclosure.

The present disclosure also provides an optical network unit, where the optical network unit comprises: a memory for storing one or more programs; one or more processors connected with the memory, the one or more programs, when executed by the one or more processors, cause the one or more processors to perform the method for multi-domain transmission described in the present disclosure.

The present disclosure also provides a computer readable storage medium storing a computer program, which when executed by a processor, cause the processor to perform the method for multi-domain transmission in an optical line terminal described in the present disclosure.

The present disclosure also provides a computer readable storage medium storing a computer program, which when executed by a processor, cause the processor to perform the method for multi-domain transmission in an optical network unit described in the present disclosure.

The present disclosure also provides a computer program product, which when executed by a device, cause the device to perform the method for multi-domain transmission in an optical line terminal described in the present disclosure.

The present disclosure also provides a computer program product, which when executed by a device, cause the device to perform the method for multi-domain transmission in an optical network unit described in the present disclosure.

To those skilled in the art, it is apparent that the present disclosure is not limited to the details of the above exemplary embodiments, and the present disclosure may be implemented with other forms without departing from the spirit or basic features of the present disclosure. Thus, in any way, the embodiments should be regarded as exemplary, not limitative; the scope of the present disclosure is limited by the appended claims, instead of the above depiction. Thus, all variations intended to fall into the meaning and scope of equivalent elements of the claims should be covered within the present disclosure. No reference signs in the claims should be regarded as limiting the involved claims. Besides, it is apparent that the term "comprise/comprising/include/including" does not exclude other units or steps, and singularity does not exclude plurality. A plurality of units or means stated in the apparatus claims may also be implemented by a single unit or means through software or hardware. Terms such as the first and the second are used to indicate names, but do not indicate any particular sequence.

## Claims

1. A method for multi-domain transmission of time synchronization in an optical line terminal, wherein the optical line terminal supports multiple domains, the method comprises: obtaining absolute Time of Day, ToD, information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number; generating at least one Physical Layer Operations, Administration and Maintenance, PLOAM, message according to the absolute ToD information and based on PLOAM message format, and broadcasting the at least one PLOAM message to optical network units.

2. The method according to claim 1, wherein the method further comprises: identifying frequency offset information relative to a main domain of each of the multiple domains except the main domain; wherein, said generating at least one PLOAM message according to the absolute ToD information and based on PLOAM message format, comprising: generating at least one PLOAM message according to the frequency offset information and the absolute ToD information and based on PLOAM message format.

3. The method according to claim 1 or 2, wherein the method further comprises: sending an Optical Network Unit, ONU, Management and Control Interface, OMCI, message to the optical network units, wherein the OMCI message is used for indicating the available domain of each optical network unit.

4. A method for multi-domain transmission of time synchronization in an optical line terminal, wherein the optical line terminal supports multiple domains, the method comprises: obtaining relative ToD information corresponding to the multiple domains according to the phase information of each domain in the multiple domains, wherein the relative ToD information comprises a value pair distributed for a main domain in the multiple domains and the phase deviation relative to the main domain of each domain except the main domain, the value pair comprises a superframe sequence number corresponding to the main domain and a timestamp of the superframe sequence number; generating at least one PLOAM message according to the relative ToD information and based on PLOAM message format, and broadcasting the at least one PLOAM message to optical network units.

5. The method according to claim 4, wherein the method further comprises: identifying frequency offset information relative to a main domain of each of the multiple domains except the main domain; wherein, said generating at least one PLOAM message according to the relative ToD information and based on PLOAM message format, comprising: generating at least one PLOAM message according to the frequency offset information and the relative ToD information and based on PLOAM message format.

6. The method according to claim 4 or 5, wherein the method further comprises: sending an OMCI message to the optical network units, wherein the OMCI message is used for indicating the available domain of each optical network unit.

7. A method for multi-domain transmission of time synchronization in an optical line terminal, wherein the optical line terminal supports multiple domains, the method comprises: obtaining absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number; generating an Passive Optical Network, xPON, frame according to the absolute ToD information and based on the extended xPON frame header, and transmitting the xPON frame to optical network units.

8. The method according to claim 7, wherein a) the extended xPON frame header is a specific-length physical synchronization block downstream, said generating an xPON frame according to the absolute ToD information and based on the extended xPON frame header, and transmitting the xPON frame to optical network units, comprising: generating an xPON frame according to the absolute ToD information and based on the specific-length physical synchronization block downstream, and transmitting the xPON frame to optical network units, wherein the specific-length physical synchronization block downstream comprises an extended timing field, the timing field is used for indicating the absolute ToD information, and/or
wherein b) the extended xPON frame header is a variable-length XGTC frame header, said generating an xPON frame according to the absolute ToD information and based on the extended xPON frame header, and transmitting the xPON frame to optical network units, comprising:
generating an xPON frame according to the absolute ToD information and based on the variable-length XGTC frame header, and transmitting the xPON frame to optical network units, wherein the variable-length XGTC frame header comprises an extended timing field and a timing length field, the timing field is used for indicating the absolute ToD information, and the timing length is used for indicating the length of the timing field.

9. The method according to any of claims 7 to 8, wherein the method further comprises: a) identifying frequency offset information relative to a main domain of each of the multiple domains except the main domain; wherein, said generating an xPON frame according to the absolute ToD information and based on the extended xPON frame header, comprising: generating an xPON frame according to the frequency offset information and the absolute ToD information and based on the extended xPON frame header, and/or
b) sending an OMCI message to the optical network units, wherein the OMCI message is used for indicating the available domain of each optical network unit.

10. A method for multi-domain transmission of time synchronization in an optical line terminal, wherein the optical line terminal supports multiple domains, the method comprises: obtaining relative ToD information corresponding to the multiple domains according to the phase information of each domain in the multiple domains, wherein the relative ToD information comprises a value pair distributed for a main domain in the multiple domains and the phase deviation relative to the main domain of each domain except the main domain, and the value pair comprises a superframe sequence number corresponding to the main domain and a timestamp of the superframe sequence number; generating an xPON frame according to the relative ToD information and based on the extended xPON frame header, and transmitting the xPON frame to optical network units.

11. The method according to claim 10, wherein a) the extended xPON frame header is a specific-length physical synchronization block downstream, said generating an xPON frame according to the relative ToD information and based on the extended xPON frame header, and transmitting the xPON frame to optical network units, comprising: generating an xPON frame according to the relative ToD information and based on the specific-length physical synchronization block downstream, and transmitting the xPON frame to optical network units, wherein the specific-length physical synchronization block downstream comprises an extended timing field, the timing field is used for indicating the relative ToD information, and/or
b) the extended xPON frame header is a variable-length XGTC frame header, said generating an xPON frame according to the relative ToD information and based on the extended xPON frame header, and transmitting the xPON frame to optical network units, comprising: generating an xPON frame according to the relative ToD information and based on the variable-length XGTC frame header, and transmitting the xPON frame to optical network units, wherein the variable-length XGTC frame header comprises an extended timing field and a timing length field, the timing field is used for indicating the relative ToD information, and the timing length is used for indicating the length of the timing field.

12. The method according to any of claims 10 to 11, wherein the method further comprises: a) identifying frequency offset information relative to the main domain of each of the multiple domains except the main domain; wherein, said generating an xPON frame according to the relative ToD information and based on the extended xPON frame header, comprising: generating an xPON frame according to the frequency offset information and the relative ToD information and based on the extended xPON frame header, and/or
b) sending an OMCI message to the optical network units, wherein the OMCI message is used for indicating the available domain of each optical network unit.

13. A method for multi-domain transmission of time synchronization in an optical network unit, wherein the method comprises: receiving a PLOAM message or an xPON frame from an optical line terminal, wherein the optical line terminal supports multiple domains, the PLOAM message or the xPON frame is generated by the optical line terminal according to absolute ToD information or relative ToD information corresponding to the multiple domains; recovering ToD information of a domain available for the optical network unit from the PLOAM message or the xPON frame.

14. The method according to claim 13, wherein the PLOAM message or xPON frame is generated by the optical line terminal according to the absolute ToD information or relative ToD information, and frequency offset information relative to a main domain of each of the multiple domains except the main domain; wherein the method further comprises: recovering frequency information of the domain available for the optical network unit from the PLOAM message or the xPON frame.

15. The method according to claim 13 or 14, wherein the method further comprises: receiving an OMCI message sent by the optical line terminal, wherein the OMCI message is used for indicating the available domain of each optical network unit.

16. A first apparatus for multi-domain transmission of time synchronization in an optical line terminal, wherein the optical line terminal supports multiple domains, the first apparatus comprises: means for obtaining absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number; means for generating at least one PLOAM message according to the absolute ToD information and based on the extended PLOAM message format, and broadcasting the at least one PLOAM message to optical network units.

17. A second apparatus for multi-domain transmission of time synchronization in an optical line terminal, wherein the optical line terminal supports a plurality of domains, the second apparatus comprises: means for obtaining relative ToD information corresponding to the multiple domains according to the phase information of each domain in the multiple domains, wherein the relative ToD information comprises a value pair distributed for the main domain and the phase deviation relative to the main domain of each domain except the main domain, the value pair comprises a superframe sequence number corresponding to the main domain and a timestamp of the superframe sequence number; means for generating at least one PLOAM message according to the relative ToD information and based on the extended PLOAM message format, and broadcasting the at least one PLOAM message to optical network units.

18. A third apparatus for multi-domain transmission of time synchronization in an optical line terminal, wherein the optical line terminal supports multiple domains, the third apparatus comprises: means for obtaining absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number; means for generating an xPON frame according to the absolute ToD information and based on the extended xPON frame header, and transmitting the xPON frame to optical network units.

19. A fourth apparatus for multi-domain transmission of time synchronization in an optical line terminal, wherein the optical line terminal supports multiple domains, the fourth apparatus comprises: means for obtaining relative ToD information corresponding to the multiple domains according to the phase information of each domain in the multiple domains, wherein the relative ToD information comprises a value pair distributed for a main domain in the multiple domains and the phase deviation relative to the main domain of each domain except the main domain, and the value pair comprises a superframe sequence number corresponding to the main domain and a timestamp of the superframe sequence number; means for generating an xPON frame according to the relative ToD information and based on the extended xPON frame header, and transmitting the xPON frame to optical network units.

20. A fifth apparatus for multi-domain transmission in an optical network unit, wherein the fifth apparatus comprises: means for receiving a PLOAM message or an xPON frame from an optical line terminal, wherein the optical line terminal supports multiple domains, the PLOAM message or the xPON frame is generated by the optical line terminal according to absolute ToD information or relative ToD information corresponding to the multiple domains; means for recovering ToD information of a domain available for the optical network unit from the PLOAM message or the xPON frame.

21. An optical line terminal, wherein the optical line terminal comprises: a memory for storing one or more programs; one or more processors connected with the memory, the one or more programs, when executed by the one or more processors, cause the one or more processors to perform at least one of the following operations a), b), c), d): a) obtaining absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number; generating at least one PLOAM message according to the absolute ToD information and based on the extended PLOAM message format, and broadcasting the at least one PLOAM message to optical network units,
b) obtaining relative ToD information corresponding to the multiple domains according to the phase information of each domain in the multiple domains, wherein the relative ToD information comprises a value pair distributed for the main domain and the phase deviation relative to the main domain of each domain except the main domain, the value pair comprises a superframe sequence number corresponding to the main domain and a timestamp of the superframe sequence number; generating at least one PLOAM message according to the relative ToD information and based on the extended PLOAM message format, and broadcasting the at least one PLOAM message to optical network units,
c) obtaining absolute ToD information corresponding to the multiple domains according to the phase information of each domain in the multiple domains, wherein the absolute ToD information comprises a value pair distributed for each domain, and the value pair distributed for each domain comprises a superframe sequence number corresponding to the domain and a timestamp of the superframe sequence number; generating an xPON frame according to the absolute ToD information and based on the extended xPON frame header, and transmitting the xPON frame to optical network units,
d) obtaining relative ToD information corresponding to the multiple domains according to the phase information of each domain in the multiple domains, wherein the relative ToD information comprises a value pair distributed for a main domain in the multiple domains and the phase deviation relative to the main domain of each domain except the main domain, and the value pair comprises a superframe sequence number corresponding to the main domain and a timestamp of the superframe sequence number; generating an xPON frame according to the relative ToD information and based on the extended xPON frame header, and transmitting the xPON frame to optical network units.

22. An optical network unit, wherein the optical network unit comprises: a memory for storing one or more programs; one or more processors connected with the memory, the one or more programs, when executed by the one or more processors, cause the one or more processors to perform the following operations: receiving a PLOAM message or an xPON frame from an optical line terminal, wherein the optical line terminal supports multiple domains, the PLOAM message or the xPON frame is generated by the optical line terminal according to absolute ToD information or relative ToD information corresponding to the multiple domains; recovering ToD information of a domain available for the optical network unit from the PLOAM message or the xPON frame.
